# FASCICULE DE BREVET EUROPEEN

(11) **EP 2 181 623 B1**
(45) Date de publication et mention de la délivrance du brevet: **10.06.2015**
(21) Numéro de dépôt: 09174073.8
(22) Date de dépôt: 26.10.2009
(51) Int. Cl.: A47B 47/00, A47B 47/04, F16B 12/24, B65D 6/18

(54) **Pièce pour meuble modulaire et meuble modulaire**
Stück für Modulmöbelstück und Modulmöbelstück
Part for modular unit and modular unit

(30) Priorité: 28.10.2008 FR 0805968
(43) Date de publication de la demande: 05.05.2010
(73) Titulaire: Poirel, Sébastien, 54110 Varangeville (FR)
(72) Inventeur: Poirel, Sébastien, 54110 Varangeville (FR)
(74) Mandataire: Novagraaf Technologies

(56) Documents cités:
- FR-A1- 2 844 848
- FR-A2- 2 073 264
- US-A1- 2002 130 597
- US-A1- 2008 246 376

## Description

### DOMAINE DE L'INVENTION

L'invention concerne une pièce pour un meuble modulaire et un meuble modulaire, en particulier pour la présentation et l'agencement.

### TECHNIQUE ANTÉRIEURE

Dans le cadre de la présentation d'objets, en particulier sur des stands d'exposition, il est nécessaire de créer rapidement des meubles de rangement ou des agencements de présentation pour des biens et des produits. Comme l'utilisation de tels meubles est temporaire, il est intéressant qu'ils puissent être stockés et transportés en prenant peu de place.

Dans le document GB 2 206 280, on a proposé un meuble formé par l'assemblage de panneaux de cloison de manière articulée. Les chants des panneaux sont munis de tubes qui sont prévus pour s'imbriquer entre panneaux adjacents. Un tourillon traverse les tubes afin de réaliser la liaison entre les panneaux. Les tourillons servent également à la fixation de plateaux supérieur ou inférieur.

Le montage d'un tel meuble n'est pas très aisé. En effet, pour pouvoir mettre en place un tourillon, il faut que les cloisons soient juxtaposées et que le plateau soit placé sur les cloisons avant de pouvoir mettre en place le tourillon. L'ensemble est instable tant que le tourillon n'est pas en place. Par ailleurs, la forme du meuble est figée.

Le document FR 2844 848 A montre un système de construction de meubles utilisant des modules en bois dont deux bords parallèles comportent des tenons destinés à s'emboîter avec ceux du module adjacent. Un tourillon traverse les tenons pour verrouiller l'assemblage.

### OBJECTIFS DE L'INVENTION

L'invention vise à fournir un meuble modulaire pouvant être assemblé rapidement et dont les pièces puissent être utilisés dans différentes configurations afin de réaliser différentes formes de meuble.

### EXPOSÉ DE L'INVENTION

Avec ces objectifs en vue, l'invention a pour objet un meuble et une pièce pour former un meuble tels que définis par les revendications indépendantes annexées.

Par exemple, un meuble est formé par l'assemblage d'au moins trois modules plans et d'au moins une cloison, les modules étant montés pivotant entre eux en formant une chaîne fermée. Chaque module comporte au moins une rainure sur une face côté intérieur de la chaîne et dans laquelle la cloison se loge.

Le meuble selon l'invention se monte très facilement. En effet, on forme d'abord une chaîne ouverte avec les modules, puis on replie la chaîne autour de la cloison en insérant celle-ci dans les rainures avant de fermer la chaîne. La cloison est guidée dans les rainures pendant le montage, ce qui limite l'instabilité des pièces pendant cette phase. Lorsque la chaîne est fermée, la cloison est emprisonnée dans les rainures. Les meubles ainsi constitués peuvent réaliser des compositions de meubles placés côte-à-côte ou superposés. Lorsque le meuble n'est pas monté, les modules et les cloisons peuvent s'empiler facilement en prenant peu de place.

De préférence, au moins l'une des articulations entre deux modules est séparable. On peut ainsi démonter le meuble en ouvrant à nouveau la chaîne. Les modules ou la chaîne peuvent être ainsi facilement stockés sans prendre beaucoup de place.

Selon une disposition constructive, au moins l'une des articulations est formée par un tourillon traversant des tenons imbriqués les uns dans les autres, les tenons faisant saillie du chant des modules. Cet assemblage, à la manière d'un assemblage à queue droite, forme une très bonne liaison mécanique. Le bord du module a ainsi une forme crènelée qui s'emboîte avec la forme crènelée d'un autre module. Le tourillon verrouille les déplacements en autorisant uniquement la rotation des modules entre eux à la manière d'une charnière.

De manière complémentaire, les tenons ont une forme arrondie centrée sur l'axe du tourillon. L'aspect de la liaison est ainsi toujours arrondi, quelque soit la position relative, c'est-à-dire l'angle d'ouverture, des modules entre eux. Cette disposition permet également de limiter l'espace de jonction entre les modules.

Selon certaines caractéristiques, un module a une forme sensiblement plane comportant des moyens pour former une articulation avec un autre module selon une direction d'articulation. Le module comporte au moins une rainure pour recevoir une cloison, la rainure étant orientée perpendiculairement à la direction d'articulation.

On peut réaliser avec un tel module un meuble tel que décrit précédemment.

De manière particulière, les moyens d'articulation comportent une première série de tenons faisant saillie du chant du module, les tenons étant percés selon l'axe d'articulation pour recevoir un tourillon. La série est prévue pour être complémentaire à celle d'un autre module afin que les tenons s'imbriquent pour former l'assemblage articulé.

De manière avantageuse, le module comporte une deuxième série de tenons symétriques à la première série par rapport à un axe perpendiculaire au plan du module. Le module peut ainsi être utilisé de manière indifférente en étant pivoté d'un demi-tour.

Selon une autre disposition, les tenons ont une forme arrondie centrée sur l'axe d'articulation. L'assemblage de deux modules présente ainsi en angle arrondi, quelque soit l'angle d'ouverture entre eux.

Le module est creux. Il est ainsi léger tout en ayant de bonnes caractéristiques mécaniques, ce qui facilite son transport et sa manipulation.

Il est obtenu par exemple par rotomoulage ou par thermosoufflage. Ces techniques sont adaptées à l'obtention de pièces creuses en matière thermoplastique. Selon une autre technique de fabrication, permettant d'obtenir des pièces creuses, le module est fabriqué en deux demi-coquilles réalisées par injection de matière thermoplastique qui sont ensuite réunies par collage ou soudage.

Selon certaines caractéristiques, un ensemble de modules tel que décrit précédemment comporte les moyens d'articulation formés par un rétrécissement rectiligne en matière souple, les rainures étant alignées. L'ensemble est obtenu avec une seule pièce, ce qui permet une meilleure productivité. Le rétrécissement rectiligne confère une bonne souplesse à l'articulation. L'une des articulations du meuble est ainsi déjà réalisée et n'a pas besoin d'être assemblée, ce qui accélère encore le montage.

L'ensemble est réalisé par exemple dans une matière choisie parmi le polypropylène, le polyéthylène, le polycarbonate ou le copolymère acrylonitrile-butadiène-styrène (ABS). Ces matières sont adaptées aux procédés de mise en forme utilisés. De plus, certains comme le polyéthylène ou le polypropylène sont suffisamment souples pour admettre le pliage du rétrécissement sans que la résistance des modules soit affectée.

### BRÈVE DESCRIPTION DES FIGURES

L'invention sera mieux comprise et d'autres particularités et avantages apparaîtront à la lecture de la description qui va suivre, la description faisant référence aux dessins annexés parmi lesquels :
- la figure 1 est une vue en perspective d'un module ne faisant pas partie de l'invention ;
- la figure 2 montre l'assemblage de deux modules de la figure 1 ;
- la figure 3 montre une phase d'assemblage des deux éléments de la figure 2 ;
- la figure 4 est une vue en perspective d'un meuble réalisé avec des modules selon la figure 1 ;
- la figure 5 est une vue de détail en profil de la zone assemblée de deux modules ;
- la figure 6 montre la dernière phase de construction d'un meuble ne faisant pas partie de l'invention ;
- la figure 7 est une vue en perspective d'un agencement de plusieurs meubles selon la Figure 6;
- la figure 8 est une vue en perspective d'un ensemble de deux modules formant une pièce selon
   l'invention ;
- la figure 9 est une vue de détail en profil de l'ensemble de la figure 8 ;
- la figure 10 montre la dernière phase de construction d'un meuble selon l'invention ;
- la figure 11 montre un meuble selon l'invention.

### DESCRIPTION DETAILLÉE

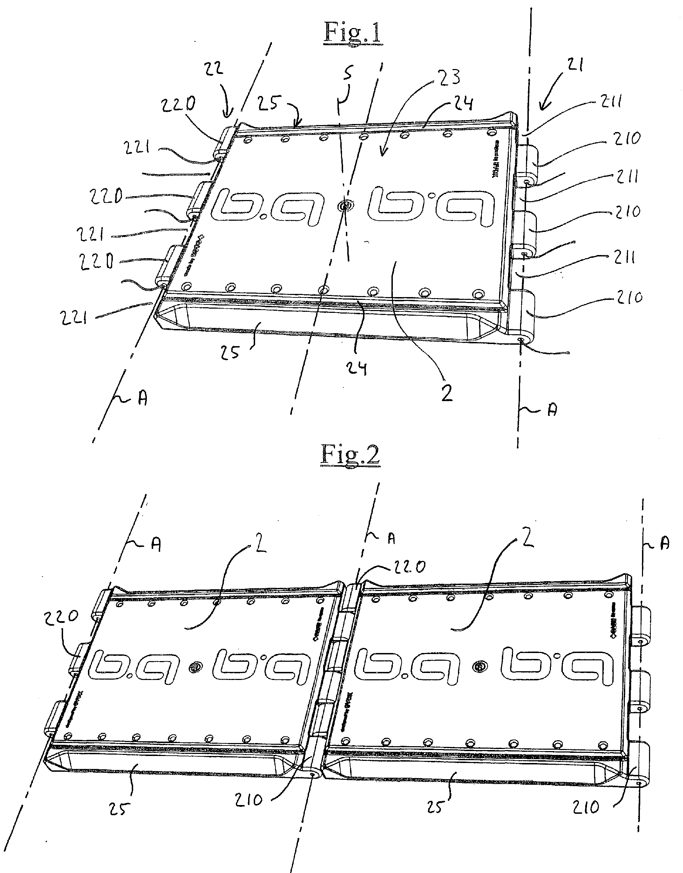

Dans une réalisation, représentée sur les figures 1 à 5, un meuble 1 comporte quatre modules 2 identiques et une cloison 3 assemblés en forme de caisson. Les quatre modules 2 forment une chaîne fermée et sont assemblés entre eux par l'intermédiaire de quatre tourillons 4.

En se référant à la figure 1, chaque module 2 est de forme sensiblement plane et comporte deux bords qui sont crènelés par la présence respectivement d'une première 21 et d'une deuxième série 22 de tenons 210, 220 séparés par des encoches 211, 221. Les tenons 210, 220 et les encoches 211, 221 ont sensiblement la même largeur. Dans l'exemple montré, chaque série 21, 22 comporte trois tenons 210, 220 et trois encoches 211, 221. Ainsi, la série commence par un tenon 210, 220 et se termine par une encoche 211, 221. La deuxième série 22 est symétrique à la première 21 par rapport à un axe de symétrie S perpendiculaire au plan du module 2. Par ailleurs, les tenons 210, 220 de chaque série 21, 22 sont percés par des perçages 212, 222 selon un axe d'articulation A parallèle au chant crènelé. En outre, les tenons 210, 220 sont arrondis de telle sorte que leur extrémité a une forme demi-cylindrique centrée sur l'axe d'articulation A.

Chaque module 2 comporte également sur l'une de ses faces, dite intérieure 23, deux rainures 24 s'étendant d'un bord crènelé à l'autre, à proximité des chants lisses 25. Les rainures 24 sont perpendiculaires à l'axe d'articulation A. La face dite extérieure 27, opposée à la face intérieure, comporte deux séries de trous borgnes parallèles aux chants lisses. Le module 2 comporte également une face de butée 26 le long de chaque série 21, 22 de tenons 210, 220, orientée à 45° en direction de l'axe d'articulation A.

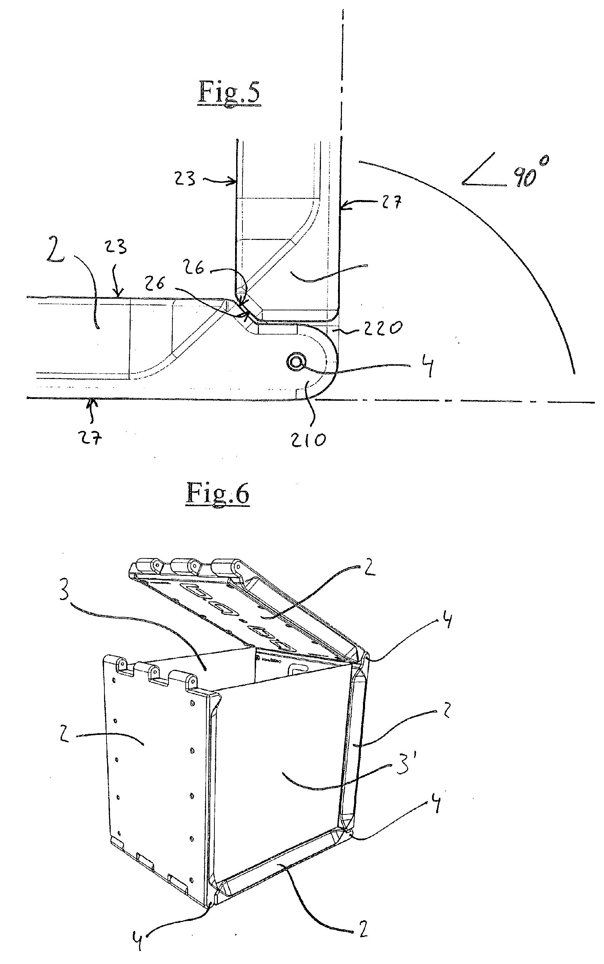

L'assemblage de deux modules 2 entre eux est montré sur la figure 2. Les séries 21, 22 de tenons 210, 220 respectives s'imbriquent en laissant peu de jeu. De plus, les perçages 212, 222 des tenons 210, 220 s'alignent. Lorsque les modules 2 sont imbriqués en étant posés sur le même plan, les chants lisses 25 des deux modules 2 sont alignés. Un tourillon 4 est inséré selon l'axe d'articulation A au travers des perçages 212, 222 des tenons 210, 220 de manière à former avec les tenons 210, 220 des moyens d'articulation entre les deux modules 2. La course de pivotement est limitée par les faces de butée 26 qui viennent en contact entre elles lorsque les modules 2 forment un angle d'environ 90°, comme le montre la figure 5.

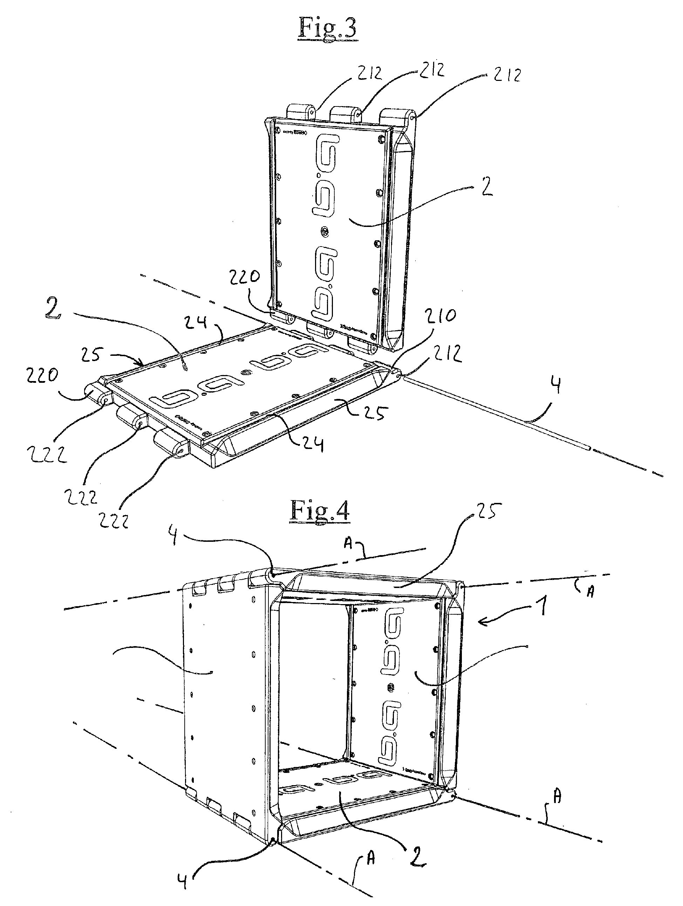

Quatre modules 2 sont assemblés de cette manière et forment ainsi une chaîne ouverte. La cloison 3, de forme carrée, est placée dans les rainures 24 des modules 2 en même temps que la chaîne est refermée autour de la cloison 3 et qu'un quatrième tourillon 4 est inséré dans les perçages 212, 222 pour verrouiller la fermeture, comme le montre la figure 4. La cloison 3 est alors emprisonnée dans les rainures 24 et réalise un contreventement des modules 2 pour maintenir une disposition en forme de caisson.

La figure 6 montre un meuble réalisé de la même manière, mais avec deux cloisons 3, 3' insérées dans les rainures 24.

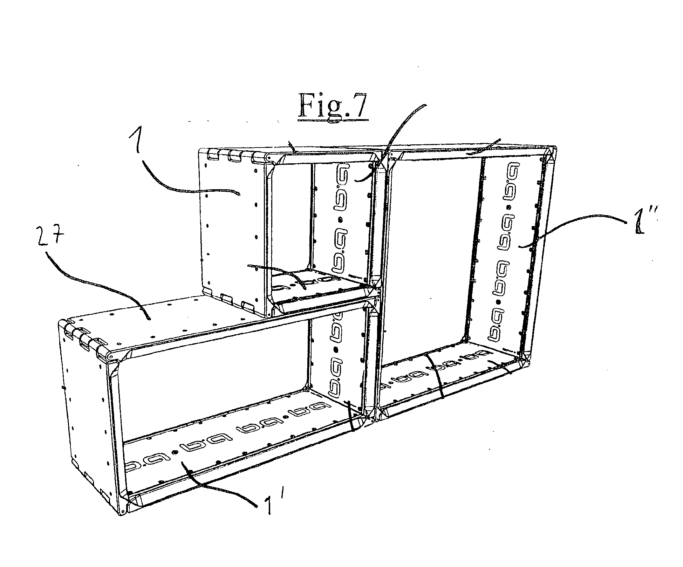

La figure 7 montre un agencement de meubles 1, 1', 1", de différentes tailles et juxtaposés entre eux. Les faces 27 en contact peuvent recevoir des petits tourillons dans les trous borgnes afin d'empêcher le glissement relatif des meubles 1, 1', 1".

Un tel meuble 1 peut facilement être démonté en retirant les tourillons 4. Les modules 2 se stockent alors facilement. On peut réaliser d'autres compositions en combinant des modules 2 de différentes tailles ou de différentes couleurs.

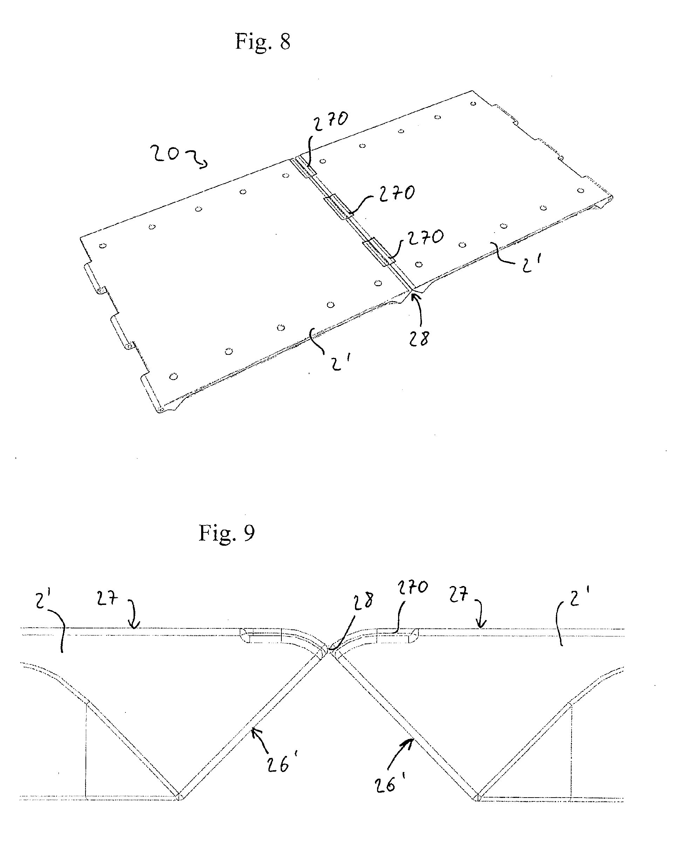

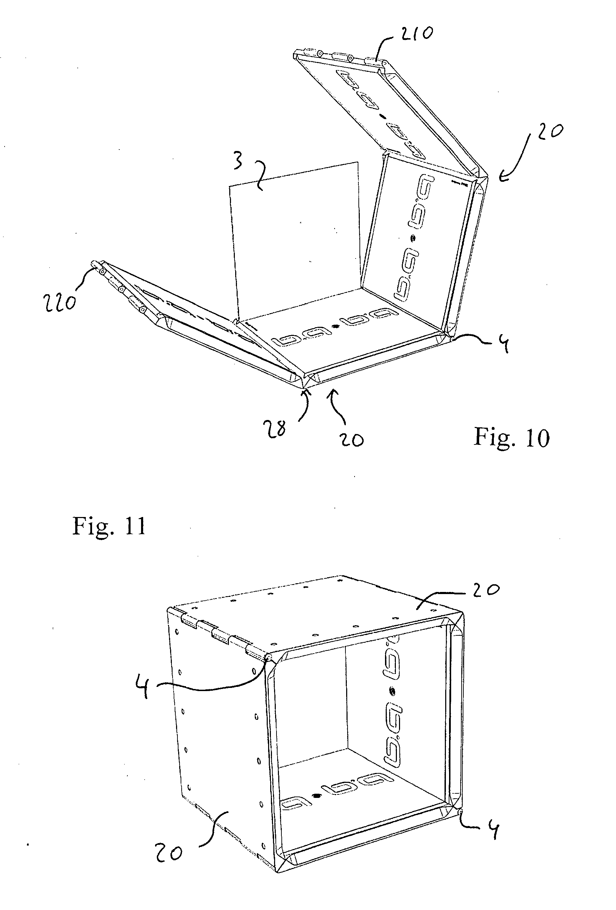

Selon un autre mode de réalisation, conforme à l'invention, montré sur les figures 8 à 11, un ensemble 20 de deux modules 2' est fabriqué dans une même pièce. Les moyens d'articulation sont formés par un rétrécissement 28 de la matière formant les modules 2', comme montré sur la figure 9. A titre d'exemple, le module 2' a une épaisseur de 30 mm et le rétrécissement 28 a une épaisseur de 1 mm. Les faces de butée 26' sont prolongées jusqu'au niveau du rétrécissement 28. Les faces extérieures 27 se raccordent au rétrécissement 28 par l'intermédiaire d'un congé 29 arrondi. Le rétrécissement 28 est interrompu au niveau de renfoncements 270 sur la face extérieure 27 afin d'assouplir les moyens d'articulation. L'ensemble 20 comporte deux séries 21, 22 de tenons, comme dans la réalisation exposée sur les figures 1 à 7, parallèles au rétrécissement 28. Dans ce mode de réalisation, l'ensemble est réalisé en matière synthétique thermoplastique telle que du polypropylène ou du polyéthylène. Cet ensemble 20 s'utilise comme dans la réalisation exposée sur les figures 1 à 7 pour former une chaîne ouverte puis construire le meuble en fermant la chaîne.

Dans les deux modes de réalisation, les modules 2' peuvent être réalisés en matière synthétique, en particulier en matière thermoplastique. Un mode de production particulièrement adapté est le rotomoulage. Un autre mode de production adapté est le thermosoufflage. Dans les deux cas, les pièces réalisées sont creuses, afin d'alléger les modules. Selon une autre technique de fabrication, on fabrique deux demi-coquilles par injection de matière thermoplastique ou par moulage de matière thermodurcissable, et ensuite on les réunit par collage ou soudage. Dans le cas de matière thermoplastique, on peut utiliser la technique de soudure par miroir, c'est-à-dire en chauffant par une face un empilement de feuilles superposées.

L'invention n'est pas limitée au mode de réalisation qui vient d'être décrit à titre d'exemple. On peut réaliser des meubles avec plus de quatre modules, par exemple de forme pentagonale ou hexagonale, régulière ou non. On peut combiner des modules de longueurs différentes.

## Revendications

1. Pièce ayant une forme sensiblement plane comportant des moyens (210, 220, 4) pour former une articulation avec une autre pièce (20) selon une direction d'articulation, au moins une rainure (24) pour recevoir une cloison (3), la rainure (24) étant orientée perpendiculairement à la direction d'articulation, les moyens d'articulation comportant une première série (21) de tenons (210, 220) faisant saillie d'un premier chant de la pièce (20), les tenons (210, 220) étant percés selon l'axe d'articulation pour recevoir un tourillon (4), et une deuxième série (22) de tenons (220) faisant saillie d'un deuxième chant de la pièce (20), la deuxième série (22) étant symétrique à la première série (21) par rapport à un plan de symétrie perpendiculaire au plan de la pièce (20) et à mi-distance du premier et du deuxième chant ou par rapport à un axe de symétrie perpendiculaire au plan de la pièce (20) et passant par l'intersection des diagonales du premier et du deuxième chant, **caractérisée en ce qu'**elle est subdivisée en au moins deux modules articulés selon la direction d'articulation par les moyens d'articulation formés par un rétrécissement (28) rectiligne de la matière entre les deux modules (2), chaque module étant creux, la pièce étant réalisée en matière synthétique thermoplastique.

2. Pièce selon la revendication 1, **caractérisée en ce qu'**elle comporte exactement deux modules (2') articulés.

3. Pièce selon la revendication 1 ou 2, dans laquelle les tenons (210, 220) ont une forme arrondie centrée sur l'axe d'articulation.

4. Pièce selon la revendication 1 ou 2, **caractérisée en ce qu'**elle est obtenue par rotomoulage ou par thermosoufflage.

5. Pièce selon la revendication 1 ou 2, **caractérisée en ce que** les rainures (24) sont alignées.

6. Pièce selon la revendication 1 ou 2, **caractérisée en ce qu'**elle est réalisée dans une matière choisie parmi le polypropylène, le polyéthylène, le polycarbonate ou le copolymère acrylonitrile-butadiène-styrène (ABS).

7. Pièce selon la revendication 1 ou 2, dans laquelle des faces extérieures (27) des modules se raccordent au rétrécissement (28) par l'intermédiaire d'un congé (29) arrondi.

8. Pièce selon la revendication 1 ou 2, dans laquelle le rétrécissement (28) est interrompu au niveau de renfoncements (270) sur une face extérieure (27).

9. Meuble formé par l'assemblage d'au moins trois modules (2') plans et d'au moins une cloison (3), les modules (2') étant montés pivotant entre eux en formant une chaîne fermée, chaque module (2') comportant au moins une rainure (24) sur une face (23) côté intérieur de la chaîne et dans laquelle la cloison (3) se loge, au moins l'une des articulations entre deux modules (2') est séparable et formée par un tourillon (4) traversant des tenons (210, 220) imbriqués les uns dans les autres, les tenons (210, 220) faisant saillie du chant des modules (2'), **caractérisé en ce que** chaque module est issu d'une pièce selon l'une des revendications 1 à 8.

10. Meuble selon la revendication 9, dans lequel les tenons (210, 220) ont une forme arrondie centrée sur l'axe du tourillon (4).

## Patentansprüche

1. Teil, das eine in etwa glatte Form hat und umfasst: Mittel (210, 220, 4), um mit einem anderen Teil (20) ein Gelenk gemäß einer Gelenkrichtung zu bilden, und mindestens eine Nut (24), um eine Wand (3) aufzunehmen, wobei die Nut (24) senkrecht zur Gelenkrichtung ausgerichtet ist und die Gelenkmittel umfassen: eine erste Reihe (21) von Zapfen (210, 220), die aus einer ersten Kante des Teils (20) herausragen, wobei die Zapfen (210, 220) in Richtung der Gelenkachse durchbohrt sind, um einen Bolzen (4) aufzunehmen, und eine zweite Reihe (22) von Zapfen (220), die aus einer zweiten Kante des Teils (20) herausragen, wobei die zweite Reihe (22) zu der ersten Reihe (21) symmetrisch ist bezogen auf eine Symmetrieebene, die senkrecht zur Ebene des Teils (20) und auf halbem Abstand zwischen der ersten und der zweiten Kante verläuft, oder bezogen auf eine Symmetrieachse, die senkrecht zur Ebene des Teils (20) über die Schnittstelle der Diagonalen der ersten und der zweiten Kante verläuft, **dadurch gekennzeichnet, dass** es in mindestens zwei Module unterteilt ist, die in der Gelenkrichtung klappbar sind durch die Gelenkmittel, die durch eine geradlinige Verjüngung (28) des Materials zwischen den beiden Modulen (2') gebildet sind, wobei jedes Modul hohl ist und das Teil aus thermoplastischem Kunststoff ausgeführt ist.

2. Teil nach Anspruch 1, **dadurch gekennzeichnet, dass** es genau zwei Module (2') umfasst.

3. Teil nach Anspruch 1 oder 2, bei dem die Zapfen (210, 220) eine abgerundete, auf die Gelenkachse zentrierte Form haben.

4. Teil nach Anspruch 1 oder 2, **dadurch gekennzeichnet, dass** es durch Rotationsformen oder durch Thermoformen hergestellt ist.

5. Teil nach Anspruch 1 oder 2, **dadurch gekennzeichnet, dass** die Nute (24) auf einer Linie liegen.

6. Teil nach Anspruch 1 oder 2, **dadurch gekennzeichnet, dass** es aus einem der Werkstoffe Polypropylen, Polyethylen, Polycarbonat oder Acrylnitril-Butadien-Styrol-Copolymer (ABS) besteht.

7. Teil nach Anspruch 1 oder 2, bei dem Außenseiten (27) der Module über eine abgerundete Hohlkehle (29) in die Verjüngung (28) übergehen.

8. Teil nach Anspruch 1 oder 2, bei dem die Verjüngung (28) an Verstärkungen (270) auf einer Außenseite (27) unterbrochen ist.

9. Möbel, das durch den Zusammenbau von mindestens drei ebenen Modulen (2') und von mindestens einer Wand (3) gebildet ist, wobei die Module (2') untereinander klappbar montiert sind und eine geschlossene Kette bilden, und jedes Modul (2') mindestens eine Nut (24) auf einer Innenseite (23) der Kette umfasst, in welche die Wand (3) eingesetzt wird, und mindestens eines der Gelenke zwischen zwei Modulen (2') trennbar ist und durch einen Bolzen (4) gebildet wird, der durch die Zapfen (210, 220) geführt ist, die ineinander verzahnt sind, wobei die Zapfen (210, 220) aus der Kante der Module (2') herausragen, **dadurch gekennzeichnet, dass** jedes Modul aus einem Teil nach einem der Ansprüche 1 bis 8 hervorgegangen ist.

10. Möbel nach Anspruch 9, bei dem die Zapfen (210, 220) eine abgerundete und auf die Achse des Bolzens (4) zentrierte Form haben.

## Claims

1. Part with a substantially flat form comprising means (210, 220, 4) to form a hinge with another part (20) according to a hinging direction, at least one groove (24) to receive a partition (3), the groove (24) being oriented perpendicularly to the hinging direction, the hinging means comprising a first set (21) of tenons (210, 220) protruding from a first edge of the part (20), the tenons (210, 220) being drilled along the hinging axis to receive a pivot pin (4), and a second set (22) of tenons (220) protruding from a second edge of the part (20), the second set (22) being symmetrical to the first set (21) in relation to a symmetry plane perpendicular to the plane of the part (20) and at mid-distance from the first and from the second edge or in relation to a symmetry axis perpendicular to the plane of the part (20) and passing via the intersection of the diagonals of the first and second edges, **characterised in that** it is subdivided into at least two modules hinged according to the hinging direction by the hinging means formed by a rectilinear reduction (28) of the material between the two modules (2'), each module being hollow, the part being made from a synthetic thermoplastic material.

2. Part according to claim 1, **characterised in that** it comprises exactly two hinged modules (2').

3. Part according to claim 1 or 2, wherein the tenons (210, 220) have a rounded form centred on the hinging axis.

4. Part according to claim 1 or 2, **characterised in that** it is obtained by rotomoulding or by blow moulding.

5. Part according to claim 1 or 2, **characterised in that** the grooves (24) are aligned.

6. Part according to claim 1 or 2, **characterised in that** it is made from a material chosen from among polypropylene, polyethylene, polycarbonate and the copolymer acrylonitrile-butadiene-styrene (ABS).

7. Part according to claim 1 or 2, wherein the outer faces (27) of the modules are blended at the reduction (28) by means of a blend radius (29).

8. Part according to claim 1 or 2, wherein the reduction (28) is interrupted at the level of reinforcements (270) on an outer face (27).

9. Furniture formed by the assembly of at least three flat modules (2') and at least one partition (3), the modules (2') being pivotally mounted in relation to each other forming a closed chain, each module (2') comprising at least one slot (24) on a face (23) on the inner side of the chain and into which the partition (3) is housed, at least one of the hinges between two modules (2') is separable and formed by a pivot pin (4) passing through tenons (210, 220) nested in each other, the tenons (210, 220) protruding from the edge of the modules (2'), **characterised in that** each module is obtained from a part according to one of the claims 1 to 8.

10. Furniture according to claim 9, wherein the tenons (210, 220) have a rounded form centred on the axis of the pivot pin (4).
